# EUROPEAN PATENT SPECIFICATION

(11) **EP 3 091 626 B1**
(45) Date of publication and mention of the grant of the patent: **11.01.2023**
(21) Application number: 14876937.5
(22) Date of filing: 30.12.2014
(51) Int. Cl.: H01H 33/59, H01H 9/54

(54) **HIGH-VOLTAGE DC CIRCUIT BREAKER**
HOCHSPANNUNGS-GLEICHSTROMSCHUTZSCHALTER
DISJONCTEUR À COURANT CONTINU HAUTE TENSION

(30) Priority: 30.12.2013 KR 20130167886
(43) Date of publication of application: 09.11.2016
(73) Proprietor: Hyosung Heavy Industries Corporation, Seoul 04144 (KR)
(72) Inventor: KIM, Byung Chol, Incheon 21680 (KR); HAN, Se Hee, Seoul 06981 (KR)
(74) Representative: Viering, Jentschura & Partner mbB Patent- und Rechtsanwälte
(86) International application number: PCT/KR2014/013067
(87) International publication number: WO 2015/102383

(56) References cited:
- EP-A1- 1 480 241
- JP-A- H0 917 294
- JP-A- S5 968 128
- JP-A- S5 968 128
- JP-A- 2003 123 569
- JP-A- 2003 123 569
- KR-B1- 100 344 056

## Description

### Technical Field

The present invention generally relates to a high-voltage Direct Current (DC) circuit breaker and, more particularly, to a high-voltage DC circuit breaker, which is configured to, when a fault occurs in a DC line for power transmission or power distribution, block a fault current flowing through the DC line.

### Background Art

Generally, a high-voltage DC circuit breaker is a switching device capable of blocking current flowing through a high-voltage power transmission line of about 50 kV or more, such as that for a High Voltage Direct Current (HVDC) system. Such a high-voltage DC circuit breaker functions to block a fault current when a fault occurs in a DC line. Of course, such a high-voltage DC circuit breaker may also be applied to an intermediate voltage DC power distribution system having a DC voltage level of about 1 to 50 kV.

In the case of a high-voltage DC circuit breaker, when a fault current occurs in the system, the fault current is blocked in such a way as to isolate a faulty circuit by opening a main switch. However, since a point corresponding to zero (0) current is not present in the DC line, a problem arises in that an arc occurring between the terminals of the main switch is not extinguished when the main switch is opened, and the fault current continuously flows through the arc, thus making it impossible to block the fault current.

Japanese Patent Application Publication No. 1984-068128, shown in FIG. 1, discloses technology in which a high-voltage DC circuit breaker allows a main switch CB to generate zero (0) current by adding current I_{DC} flowing through the main switch CB to resonant current Ip generated by an L/C circuit (Idc = I_{DC} +Ip) and extinguish the arc in order to extinguish the arc occurring when the main switch CB is opened and to block fault current Ic. In this conventional technology, when the main switch CB is closed, the resonant current Ip is injected to be added to the DC current I_{DC}, and thereafter the resonant current Ip becomes oscillating current due to LC resonance. As the current oscillates along with the main switch CB, the magnitude thereof becomes larger. In this way, negative (-) resonant current (-Ip) becomes greater than I_{DC}, so that the fault current Ic becomes zero current, and then the arc in the main switch CB is extinguished.

However, such conventional technology is problematic in that resonant current Ip greater than DC current I_{DC} must be added, and thus the actual circuit rating must be more than twice that of the rated current, and in that, in order to generate such a high resonant current Ip, resonance must be performed several times, and thus the blocking speed is decreased. Further, the conventional DC circuit breaker is problematic in that it is impossible to block a bidirectional fault current.

In addition to the above, EP 1 480 241 A1 discloses a DC rapid switching device with a switching unit and a quenching circuit parallel to the switching unit. Further examples of high voltage DC circuit breakers are known, e.g., from JP S59 68128 A and JP 2003 123569 A.

JPS59 68128 A discloses a high-voltage DC circuit breaker, comprising a mechanical switch adapted to be installed on a DC line with an L/C circuit including a capacitor and a reactor connected in parallel with the mechanical switch, and connected in series with each other so as to cause LC resonance. A charging resistor is connected between the junction of the L/C circuit and the first auxiliary switch and a ground to charge a voltage in the capacitor.

### Disclosure

### Technical Problem

Accordingly, an object of the present invention is to provide a high-voltage DC circuit breaker, which allows a main switch to block a fault current even if the high-voltage DC circuit breaker does not apply a resonant current to the main switch.

Another object of the present invention is to provide a high-voltage DC circuit breaker, which can block a bidirectional fault current using a single circuit.

A further object of the present invention is to provide a high-voltage DC circuit breaker, which can block a fault current using a small number of semiconductor devices.

### Technical Solution

To accomplish the above objects, the present invention provides a high-voltage DC circuit breaker according to claim 1. Further advantageous embodiments are described in the dependent claims, for example:
In the present invention, the first and second semiconductor switches may be respectively turn-on/turn-off controllable and may be connected in parallel with each other and oriented in opposite directions.

In the present invention, the current supplied to the mechanical switch using the voltage (-Vc) charged in the capacitor may have a direction opposite that of arc current continuously flowing through the arc in the mechanical switch and has a magnitude greater than that of the arc current.

In the present invention, when the arc is extinguished at the mechanical switch, the first and second semiconductor switches may be turned off, and current flowing through the line may be supplied to the capacitor, thus enabling the capacitor to be recharged to an initial voltage (+Vc).

In the present invention, the high-voltage DC circuit breaker may further include a nonlinear resistor connected in parallel with the mechanical switch, wherein when the arc is extinguished at the mechanical switch, a voltage on a second side of the line, which becomes higher than a voltage on the first side of the line, is consumed in the nonlinear resistor.

### Advantageous Effects

According to the present invention, the high-voltage DC circuit breaker can rapidly extinguish an arc that is formed when a mechanical switch is opened, thus promptly blocking a fault current.

Further, the high-voltage DC circuit breaker according to the present invention may block a bidirectional fault current using a single circuit.

Furthermore, according to the present invention, the high-voltage DC circuit breaker may be implemented using a minimal number of electric devices, thus reducing the size and cost of circuit breakers.

### Description of Drawings

FIG. 1 is a configuration diagram showing a conventional high-voltage DC circuit breaker;
FIG. 2 is a configuration diagram showing a high-voltage DC circuit breaker according to an embodiment of the present invention;
FIG. 3 is a schematic diagram showing the operating procedure of the high-voltage DC circuit breaker in a steady state according to an embodiment of the present invention;
FIG. 4 is a schematic diagram showing a process in which the high-voltage DC circuit breaker blocks a fault current when a fault occurs on the second side of a high-voltage DC line according to an embodiment of the present invention; and
FIG. 5 is a schematic diagram showing the operating procedure of the high-voltage DC circuit breaker in a steady state according to another embodiment of the present invention.

### Best Mode

Preferred embodiments of the present invention will be described in detail below with reference to the accompanying drawings. Descriptions of known functions or configurations which have been deemed to make the gist of the present invention unnecessarily obscure will be omitted below.

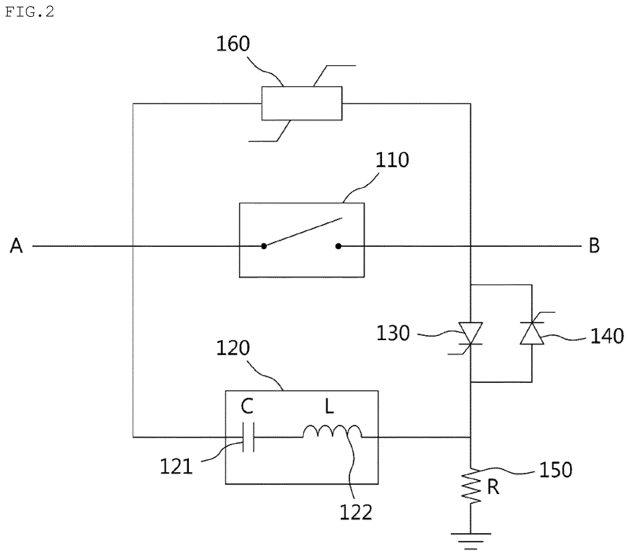

FIG. 2 is a configuration showing a high-voltage DC circuit breaker according to an embodiment of the present invention.

Referring to FIG. 2, the high-voltage DC circuit breaker according to the embodiment of the present invention includes a mechanical switch 110 adapted to be installed on a DC line for connecting a first side (side A) to a second side (side B). Such a mechanical switch 110 basically functions to block the DC line so as to prevent a fault current from continuously flowing into a faulty circuit when a fault occurs on side A or B. For this operation, the mechanical switch 110 is closed in a steady state, and is opened in the occurrence of a fault. The switching operation of the mechanical switch 110 is controlled in response to a control signal from a control unit (not shown). Since a high current flows through the mechanical switch 110, an arc is formed across the two end electrodes of the mechanical switch 110 when the mechanical switch 110 is opened in the occurrence of a fault, and the fault current flows through the DC line via the arc. Therefore, the present invention requires an additional circuit so as to completely block the fault current by extinguishing the arc.

For this operation, in the present invention, an L/C circuit 120 and a first semiconductor switch 130 are connected in parallel with the mechanical switch 110, and a second semiconductor switch 140 is connected in parallel with the first semiconductor switch 130. The first and second semiconductor switches 130 and 140 are connected in parallel with each other and oriented in opposite directions so as to switch the bidirectional flow of current, wherein the first semiconductor switch 130 switches the flow of current in one direction, and the second semiconductor switch 140 switches the flow of current in the direction opposite the one direction. Each of the first and second semiconductor switches 130 and 140 includes, for example, a power semiconductor switch, and the switching operation thereof is controlled by a control unit (not shown). In the present embodiment, the power semiconductor switch may be a turn-on controllable device, and may be implemented as, for example, a thyristor. Alternatively, the power semiconductor switch may be a turn-on/turn-off controllable device and may be implemented as, for example, a Gate Turn-Off (GTO) thyristor, an Integrated Gate-Commutated Thyristor (IGCT), or an Insulated Gate Bipolar Transistor (IGBT).

The L/C circuit 120 is implemented using a capacitor 121 and an inductor 122, which are connected in series. The L/C circuit 120 performs charging and discharging of the capacitor 121, thus causing LC resonance through the first or second semiconductor switch 130 or 140.

Furthermore, in the high-voltage DC circuit breaker according to the present embodiment, a charging resistor 150 for charging the capacitor 121 may be connected between the junction of the L/C circuit 120 and the first semiconductor switch 130 and a ground GND. Through the charging resistor 150, the capacitor 131 of the L/C circuit 120 is charged to an initial voltage (+Vc).

The high-voltage DC circuit breaker according to the present embodiment may further include a nonlinear resistor 160 connected in parallel with the mechanical switch 110.

Such a nonlinear resistor 160 is configured to prevent overvoltage equal to or greater than a rated voltage from being applied across the two ends of the high-voltage DC circuit breaker when the mechanical switch 110 is closed. The nonlinear resistor 160 is operated such that, when a high voltage attributable to a fault, that is, a voltage equal to or greater than a preset reference voltage, is applied across the two ends of the high-voltage DC circuit breaker 100, the nonlinear resistor 160 is automatically turned on, thus consuming the high voltage. In the present embodiment, the nonlinear resistor 160 may be implemented as, for example, a varistor.

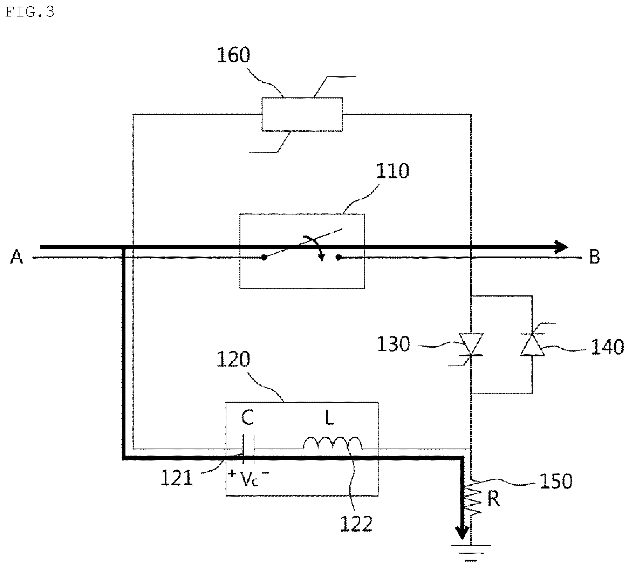

FIG. 3 is a schematic diagram showing the operating procedure of the high-voltage DC circuit breaker in a steady state according to an embodiment of the present invention.

Referring to FIG. 3, in the high-voltage DC circuit breaker according to the present invention, the mechanical switch 110 is closed in a steady state, so that a DC current is supplied along the DC line in a direction from the first side (side A) to the second side (side B) through the mechanical switch 110. Here, in the state in which the first and second semiconductor switches 130 and 140 are turned off, current flowing through the DC line is supplied to the L/C circuit 120, thus enabling the capacitor 121 to be charged to the initial voltage (+Vc).

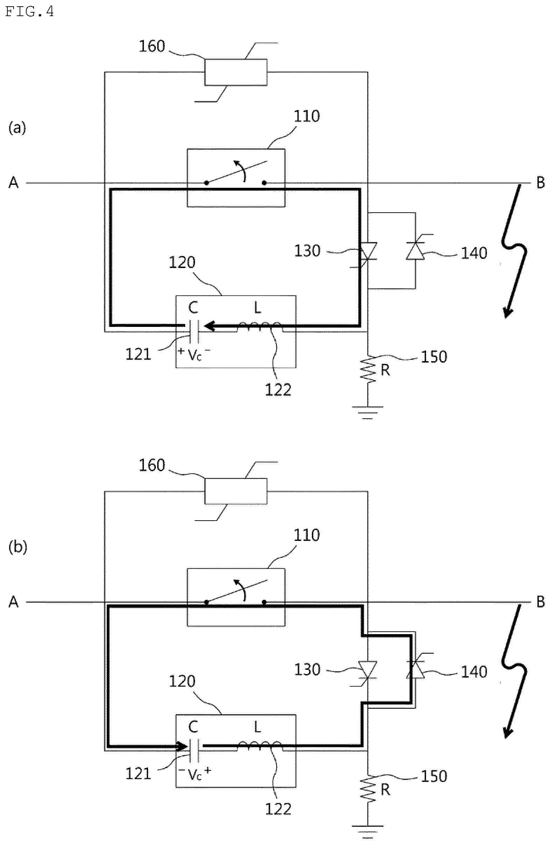

FIG. 4 is a schematic diagram showing a process in which the high-voltage DC circuit breaker blocks a fault current when a fault occurs on the second side of a high-voltage DC line according to an embodiment of the present invention.

Referring to FIG. 4, in the high-voltage DC circuit breaker according to the present invention, when a fault occurs on the second side (side B), the mechanical switch 110 is opened, and the first semiconductor switch 130 is turned on in the state in which and the second semiconductor switch 140 is turned off, in order to prevent current from flowing through the DC line. When the mechanical switch 110 is opened, an arc is formed, and a fault current flows through the arc in the direction from side A to side B.

Here, as shown in FIG. 4(a), as the first semiconductor switch 130 is primarily turned on, current flows through the arc formed in the mechanical switch 110 and the first semiconductor switch 130 using the initial voltage (+Vc) charged in the capacitor 121, and then LC resonance occurs in the L/C circuit 120. Depending on this LC resonance, polarity-reversed voltage (-Vc) is charged in the capacitor 121.

When the polarity-reversed voltage (-Vc) is charged in the capacitor 121 in this way, the first semiconductor switch 130 is again turned off, and the second semiconductor switch 140 is turned on, as shown in FIG. 4(b), so that current flows through the second semiconductor switch 140 and the arc formed in the mechanical switch 110 using the polarity-reversed voltage (-Vc). Since the direction of this current is opposite that of the fault current in the mechanical switch 110, zero current is realized in the mechanical switch 110, and thus the arc is extinguished. Therefore, the current supplied to the mechanical switch 110 preferably has a direction opposite that of the fault current continuously flowing through the arc in the mechanical switch 110, and has a magnitude greater than that of the fault current.

Thereafter, when the arc is extinguished, both the first and second semiconductor switches 130 and 140 are turned off, and current flowing through the DC line is supplied to the L/C circuit 120, so that the capacitor 121 is recharged to the initial voltage (+Vc). At this time, when the arc formed in the mechanical switch 110 is completely extinguished, and the fault current at the mechanical switch 110 is blocked, the voltage on side A sharply rises, compared to the voltage on side B. This rising voltage on side A is consumed in the nonlinear resistor 160, which is connected in parallel with the mechanical switch 110, thus protecting the circuit on side A.

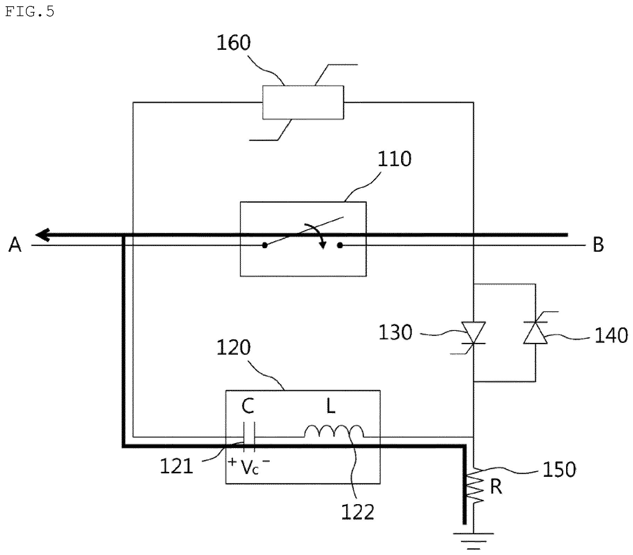

FIG. 5 is a schematic diagram showing the operating procedure of the high-voltage DC circuit breaker in a steady state according to another embodiment of the present invention.

FIG. 5 illustrates the operating procedure of the high-voltage DC circuit breaker when current is supplied from the second side (side B) to the first side (side A), unlike FIG. 3. Referring to the embodiment of FIG. 5, the mechanical switch 110 is closed in a steady state, and a DC current is supplied along the DC line in the direction from the second side (side B) to the first side (side A) through the mechanical switch 110. Here, in the state in which the first and second semiconductor switches 130 and 140 are turned off, the current flowing through the DC line is supplied to the L/C circuit 120, so that the capacitor 121 is charged to an initial voltage (+Vc). Thereafter, when a fault occurs on the first side (side A), a fault current is blocked using the same operating procedure as that described above with reference to FIG. 4.

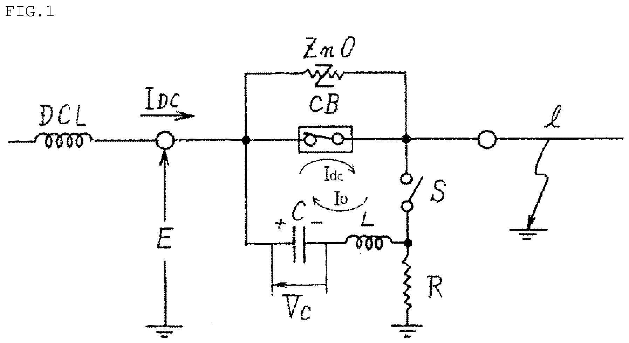

As described above, the high-voltage DC circuit breaker according to the present invention performs LC resonance only once in order to reverse the voltage polarity of the capacitor 121 of the L/C circuit 120, rather than increasing a resonant current via current oscillation depending on LC resonance, as in the case of the conventional technology shown in FIG. 1. This makes the blocking of the circuit breaker faster than that of the conventional technology. Further, unlike the conventional technology of FIG. 1, the present invention extinguishes an arc by injecting current in the direction opposite that of the fault current flowing through the arc in the mechanical switch 110 using the voltage (-Vc) stored in the capacitor 121, and by generating zero current.

As described above, although the present invention has been described in detail with reference to preferred embodiments, it should be noted that the present invention is not limited to the description of these embodiments. It is apparent that those skilled in the art to which the present invention pertains can perform various changes or modifications of the present invention without departing from the scope of the accompanying claims and those changes or modifications belong to the technical scope of the present invention although they are not presented in detail in the embodiments. Accordingly, the technical scope of the present invention should be defined by the accompanying claims.

## Claims

1. A high-voltage DC circuit breaker, comprising:
a mechanical switch (110) adapted to be installed on a DC line;
an L/C circuit (120) including a capacitor (121) and a reactor (122) connected in parallel with the mechanical switch (110), and connected in series with each other so as to cause LC resonance;
a first semiconductor switch (130) connected in series with the L/C circuit (120) and configured to switch a flow of current in one direction;
a second semiconductor switch (140) connected in parallel with the first semiconductor switch (130) and configured to switch a flow of current in a direction opposite the one direction; and
a charging resistor (150) connected between the junction of the L/C circuit (120) and the first semiconductor switch (130) and a ground (GND) to charge a voltage (+Vc) in the capacitor (121),
wherein, in a steady state, the first and second semiconductor switches (130 and 140) are turned off, and current flowing through the line is supplied to the capacitor (121), thus enabling an initial voltage (+Vc) to be charged in the capacitor (121),
wherein, when a fault occurs on a first side of the DC line, the mechanical switch (110) is opened, and the first semiconductor switch (130) is turned on in a state in which the second semiconductor switch (140) is turned off, so that current flows through an arc formed in the mechanical switch (110) and the first semiconductor switch (130) using the initial voltage (+Vc) charged in the capacitor (121), thus enabling a polarity-reversed voltage (-Vc) to be charged in the capacitor (121) via LC resonance,
wherein, when the polarity-reversed voltage (-Vc) is charged in the capacitor (121), the first semiconductor switch (130) is turned off and the second semiconductor switch (140) is turned on, so that current depending on the polarity-reversed voltage (-Vc) is supplied to the mechanical switch (110) through the second semiconductor switch (140), and zero current is realized in the mechanical switch (110) using the supplied current, thus extinguishing the arc.

2. The high-voltage DC circuit breaker of claim 1, wherein the first and second semiconductor switches (130 and 140) are respectively turn-on/turn-off controllable and are connected in parallel with each other and oriented in opposite directions.

3. The high-voltage DC circuit breaker of claim 1, wherein the current supplied to the mechanical switch (110) using the voltage (-Vc) charged in the capacitor (121) has a direction opposite that of arc current continuously flowing through the arc in the mechanical switch (110) and has a magnitude greater than that of the arc current.

4. The high-voltage DC circuit breaker of claim 1, wherein, when the arc is extinguished at the mechanical switch (110), the first and second semiconductor switches (130 and 140) are turned off, and current flowing through the DC line is supplied to the capacitor (121), thus enabling the capacitor (121) to be recharged to an initial voltage (+Vc).

5. The high-voltage DC circuit breaker of claim 1, further comprising a nonlinear resistor (160) connected in parallel with the mechanical switch (110),
wherein when the arc is extinguished at the mechanical switch (110), a voltage on a second side of the DC line, which becomes higher than a voltage on the first side of the line, is consumed in the nonlinear resistor (160).

## Patentansprüche

1. Hochspannungs-Gleichstrom-Schutzschalter, aufweisend:
einen mechanischen Schalter (110), der angepasst ist, um an einer Gleichstromleitung installiert zu sein,
eine L/C-Schaltung (120), aufweisend einen Kondensator (121) und eine Drossel (122), die mit dem mechanischen Schalter (110) parallelgeschaltet sind und miteinander in Reihe geschaltet sind, um eine LC-Resonanz zu erzeugen,
einen ersten Halbleiterschalter (130), der mit der L/C-Schaltung (120) in Reihe geschaltet ist und konfiguriert ist, um einen Stromfluss in einer Richtung zu schalten,
einen zweiten Halbleiterschalter (140), der mit dem ersten Halbleiterschalter (130) parallelgeschaltet ist und konfiguriert ist, um einen Stromfluss in einer Richtung entgegengesetzt zu der einen Richtung zu schalten, und
einen Ladewiderstand (150), der zwischen dem Übergang der L/C-Schaltung (120) und dem ersten Halbleiterschalter (130) und einer Masse (GND) verbunden ist, um eine Spannung (+Vc) in den Kondensator (121) zu laden,
wobei in einem stabilen Zustand der erste und der zweite Halbleiterschalter (130 und 140) ausgeschaltet sind und Strom, der durch die Leitung fließt, dem Kondensator (121) zugeführt wird, wodurch das Laden einer Anfangsspannung (+Vc) in den Kondensator (121) ermöglicht wird,
wobei, wenn ein Fehler auf einer ersten Seite der Gleichstromleitung auftritt, der mechanische Schalter (110) geöffnet wird und der erste Halbleiterschalter (130) in einem Zustand eingeschaltet wird, in dem der zweite Halbleiterschalter (140) ausgeschaltet ist, so dass Strom durch einen Lichtbogen fließt, der in dem mechanischen Schalter (110) und dem ersten Halbleiterschalter (130) gebildet wird, unter Verwendung der in den Kondensator (121) geladenen Anfangsspannung (+Vc), so dass ermöglicht wird, dass eine Spannung mit umgekehrter Polarität (-Vc) über LC-Resonanz in den Kondensator (121) geladen wird,
wobei, wenn die Spannung mit umgekehrter Polarität (-Vc) in den Kondensator (121) geladen wird, der erste Halbleiterschalter (130) ausgeschaltet wird und der zweite Halbleiterschalter (140) eingeschaltet wird, so dass Strom in Abhängigkeit von der Spannung mit umgekehrter Polarität (-Vc) dem mechanischen Schalter (110) durch den zweiten Halbleiterschalter (140) zugeführt wird und Nullstrom in dem mechanischen Schalter (110) unter Verwendung des zugeführten Stroms realisiert wird, wodurch der Lichtbogen gelöscht wird.

2. Hochspannungs-Gleichstrom-Schutzschalter gemäß Anspruch 1, wobei der erste und der zweite Halbleiterschalter (130 und 140) jeweils einschalt-/ausschaltsteuerbar sind und miteinander parallelgeschaltet sind und in entgegengesetzten Richtungen ausgerichtet sind.

3. Hochspannungs-Gleichstrom-Schutzschalter gemäß Anspruch 1, wobei der Strom, der dem mechanischen Schalter (110) unter Verwendung der in den Kondensator (121) geladenen Spannung (-Vc) zugeführt wird, eine Richtung hat, die zu der des Lichtbogenstroms entgegengesetzt ist, der kontinuierlich durch den Lichtbogen in dem mechanischen Schalter (110) fließt, und eine Größe hat, die größer als die des Lichtbogenstroms ist.

4. Hochspannungs-Gleichstrom-Schutzschalter gemäß Anspruch 1, wobei, wenn der Lichtbogen am mechanischen Schalter (110) gelöscht wird, der erste und der zweite Halbleiterschalter (130 und 140) ausgeschaltet werden und Strom, der durch die Gleichstromleitung fließt, dem Kondensator (121) zugeführt wird, wodurch ermöglicht wird, dass der Kondensator (121) wieder auf eine Anfangsspannung (+Vc) aufgeladen wird.

5. Hochspannungs-Gleichstrom-Schutzschalter gemäß Anspruch 1, ferner aufweisend einen nichtlinearen Widerstand (160), der mit dem mechanischen Schalter (110) parallelgeschaltet ist,
wobei, wenn der Lichtbogen an dem mechanischen Schalter (110) gelöscht wird, eine Spannung auf einer zweiten Seite der Gleichstromleitung, die höher als eine Spannung auf der ersten Seite der Leitung wird, in dem nichtlinearen Widerstand (160) verbraucht wird.

## Revendications

1. Disjoncteur à courant continu haute tension, comprenant :
un commutateur mécanique (110) adapté pour être installé sur une ligne à courant continu ;
un circuit L/C (120) comprenant un condensateur (121) et une bobine de réactance (122) connectés en parallèle avec le commutateur mécanique (110), et connectés en série l'un avec l'autre de manière à provoquer une résonance LC ;
un premier commutateur à semi-conducteur (130) connecté en série avec le circuit L/C (120) et configuré pour commuter un flux de courant dans une direction ;
un deuxième commutateur à semi-conducteur (140) connecté en parallèle avec le premier commutateur à semi-conducteur (130) et configuré pour commuter un flux de courant dans une direction opposée à ladite une direction ; et
une résistance de charge (150) connectée entre la jonction du circuit L/C (120) et le premier commutateur à semi-conducteur (130) et une masse (GND) pour charger une tension (+Vc) dans le condensateur (121),
dans lequel, dans un état stable, les premier et deuxième commutateurs à semi-conducteur (130 et 140) sont désactivés, et le courant circulant à travers la ligne est fourni au condensateur (121), permettant ainsi à une tension initiale (+Vc) d'être chargée dans le condensateur (121),
dans lequel, lorsqu'un défaut se produit sur un premier côté de la ligne à courant continu, le commutateur mécanique (110) est ouvert, et le premier commutateur à semi-conducteur (130) est activé dans un état dans lequel le deuxième commutateur à semi-conducteur (140) est désactivé, de sorte que le courant circule à travers un arc formé dans le commutateur mécanique (110) et le premier commutateur à semi-conducteur (130) en utilisant la tension initiale (+Vc) chargée dans le condensateur (121), permettant ainsi à une tension inversée en polarité (-Vc) d'être chargée dans le condensateur (121) via une résonance LC,
dans lequel, lorsque la tension inversée en polarité (-Vc) est chargée dans le condensateur (121), le premier commutateur à semi-conducteur (130) est désactivé et le deuxième commutateur à semi-conducteur (140) est activé, de sorte qu'un courant dépendant de la tension inversée en polarité (-Vc) est fourni au commutateur mécanique (110) par l'intermédiaire du deuxième commutateur à semi-conducteur (140), et un courant nul est réalisé dans le commutateur mécanique (110) en utilisant le courant fourni, éteignant ainsi l'arc.

2. Disjoncteur à courant continu haute tension selon la revendication 1, dans lequel les premier et deuxième commutateurs à semi-conducteur (130 et 140) sont respectivement contrôlables pour être activés/désactivés et sont connectés en parallèle l'un avec l'autre et orientés dans des directions opposées.

3. Disjoncteur à courant continu haute tension selon la revendication 1, dans lequel le courant fourni au commutateur mécanique (110) en utilisant la tension (-Vc) chargée dans le condensateur (121) a une direction opposée à celle du courant d'arc circulant continuellement à travers l'arc dans le commutateur mécanique (110) et a une magnitude supérieure à celle du courant d'arc.

4. Disjoncteur à courant continu haute tension selon la revendication 1, dans lequel, lorsque l'arc est éteint au niveau du commutateur mécanique (110), les premier et deuxième commutateurs à semi-conducteur (130 et 140) sont désactivés, et le courant circulant à travers la ligne à courant continu est fourni au condensateur (121), permettant ainsi au condensateur (121) d'être rechargé à une tension initiale (+Vc).

5. Disjoncteur à courant continu haute tension selon la revendication 1, comprenant en outre une résistance non linéaire (160) connectée en parallèle avec le commutateur mécanique (110),
dans lequel, lorsque l'arc est éteint au niveau du commutateur mécanique (110), une tension sur un deuxième côté de la ligne à courant continu, qui devient supérieure à une tension sur le premier côté de la ligne, est consommée dans la résistance non linéaire (160).
